# EUROPÄISCHE PATENTSCHRIFT

(11) **EP 2 243 699 B1**
(45) Veröffentlichungstag und Bekanntmachung des Hinweises auf die Patenterteilung: **18.04.2012**
(21) Anmeldenummer: 09005615.1
(22) Anmeldetag: 22.04.2009
(51) Int. Cl.: B63H 23/24, B63H 23/12, B63H 21/20, B63J 3/02

(54) **Antriebssystem für ein Schiff**
Drive system for a ship
Système d'entraînement pour un bateau

(43) Veröffentlichungstag der Anmeldung: 27.10.2010
(73) Patentinhaber: Christophel, Claus-D., 23743 Grömitz (DE)
(72) Erfinder: Christophel, Claus-D., 23743 Grömitz (DE)
(74) Vertreter: Ruckh, Rainer Gerhard

(56) Entgegenhaltungen:
- EP-A- 0 536 876
- WO-A-2008/130968
- DE-A1- 3 043 692
- DE-U1- 29 604 437
- FR-A- 2 907 979
- US-A- 5 233 282
- US-A1- 2008 064 273

## Beschreibung

Die Erfindung betrifft ein Antriebssystem für ein Schiff.

Schiffe der in Rede stehenden Art weisen typischerweise als Antriebsaggregat einen Dieselmotor auf, mit dem eine Antriebswelle mit einem Propeller in Drehbewegung versetzt wird. Je nach Größe des Schiffs können auch mehrere Propeller an gegebenenfalls mehreren Antriebswellen vorgesehen sein.

Derartige Schiffe können als Frachtschiffe und dabei insbesondere als Binnenschiffe ausgebildet sein. Derartige Binnenschiffe werden in vier unterschiedlichen Modes betrieben, nämlich dem Mode der Bergfahrt bei voll beladenem Schiff, den Modes der Talfahrt bei voll beladenem beziehungsweise leerem Schiff und dem Mode der Kanalfahrt.

Die Auslegung der Antriebsleistung erfolgt dabei stets so, dass diese nach dem größtmöglichen Lastfall, nämlich der Bergfahrt bei voll beladenem Schiff ausgelegt wird, um stets eine Leistungsreserve zur Verfügung zu haben, die ein Manövrieren des Schiffs auch unter ungünstigsten Bedingungen gewährleistet.

Nachteilig hierbei ist, dass in den meisten Modes, insbesondere den Modes der Talfahrt und dem Mode der Kanalfahrt nur ein geringer Bruchteil der erzeugten Leistung benötigt wird, so dass das Antriebsaggregat in einem energetisch ungünstigen Teillastbetrieb betrieben wird. Weiterhin ist nachteilig, dass derartige Antriebssysteme nicht ausfallsicher sind, das heißt der Ausfall einzelner Komponenten kann zur Manövrierunfähigkeit des Schiffs führen.

Aus der DE 35 31 990 A1 ist ein Antriebssystem für ein Fahrgastschiff bekannt. Dieses Antriebssystem weist als Antriebsmotor einen langsam laufenden Dieselmotor auf, der so ausgelegt ist, dass er die maximal benötigte Reisegeschwindigkeit abdeckt. Für den darüber hinaus gehenden Leistungsbedarf zum Erreichen der Spitzengeschwindigkeit ist mit dem Dieselmotor ein elektrischer Motor in Reihe geschaltet. Die Erzeugung der elektrischen Energie hierfür erfolgt mittels einer Anordnung schnell laufender Viertaktmotoren.

Durch den zusätzlichen Elektromotor kann der Dieselmotor energetisch günstiger ausgelegt werden, jedoch ist auch dort keine Ausfallsicherheit gewährleistet.

Aus der DE 102 31 152 A1 ist ein Schiff, insbesondere ein Marine-(Navy-) Schiff bekannt, das mehrere Antriebe, die insbesondere mit Propellern ausgestattet sein können, aufweist. Die Antriebe werden über ein elektrisches Energieversorgungssystem versorgt. Dieses umfasst Brennstoffzellen die ein Gleichstromnetz speisen, mit dem die Energieversorgung von Normalfahrtantrieben erfolgt. Zudem umfasst das Energieversorgungssystem ein Wechselstromnetz mit Generatoren zur Energieversorgung für Schnellfahrtantriebe. Zwischen dem Gleich- und Wechselstromnetz kann Energie ausgetauscht werden. Bei dieser Anordnung ist nur für die Einheiten des Gleichspannungsnetzes eine Redundanz vorgesehen. Zudem bedeutet das Vorsehen zweier Stromnetze einen erheblichen konstruktiven Aufwand.

Aus der FR-A-2 907 979 welche den nächstliegenden, bekannten Stand der Technik darstellt ist ein Antriebssystem für ein Schiff bekannt, das zur Energieversorgung eines elektrischen Antriebs neben einem Generator auch eine Batterie aufweist. Die mit diesen Energieversorgungseinheiten generierten Wechselspannungen werden mittels eines AC/DC- Wandlers in eine Gleichspannung für den elektrischen Antrieb gewandelt. Weiterhin ist als Verteiler eine Platine mit Schaltelementen vorgesehen, mittels derer steuerbar ist, von welchen Energieversorgungseinheiten Energie in dem elektrischen Antrieb eingespeist wird.

Die WO 2008/130968 A1 betrifft ein Energieversorgungssystem für ein Marineschiff, welches einen Motor zum Antrieb einer Antriebswelle mit einem Propeller aufweist. Als Energieversorgungsmodule sind Generatoren und gegebenenfalls Batterien vorgesehen, die von einem Controller gesteuert werden, um diese so in verschiedenen Betriebsarten betreiben zu können. Die Energieversorgungsmodule bilden Teilnehmer eines Wechselspannungskreises. Die Antriebsseite ist an einen Gleichspannungsbus angeschlossen. Zur Kopplung beider Busse ist eine Anordnung von Gleichrichtern vorgesehen.

Aus der DE 30 43 692 A1 und US-A-233282 sind weitere Antriebssysteme für Schiffe bekannt, die als Energieversorgungsmodule Batterien aufweisen.

Der Erfindung liegt die Aufgabe zugrunde, ein Antriebssystem für ein Schiff bereitzustellen, welches bei hoher Ausfallsicherheit energieeffizient arbeitet.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Antriebssystem für ein Schiff umfasst eine Antriebswelle mit einem Propeller und einer Mehrfachanordnung von elektrischen Antrieben auf der wenigstens einen Antriebswelle als erste modulare, redundante Einheiten. Als zweite modulare, redundante Einheiten sind Generatoren für die Energieversorgung der elektrischen Antriebe vorgesehen. Eine Anordnung von Batterien ist vorgesehen, wobei die Batterien über Schaltmittel wahlweise so schaltbar sind, dass mit diesen eine Energieversorgung der elektrischen Antriebe durchführbar ist oder dass diese mittels der Generatoren aufladbar sind. Die Batterien sind über das oder die Schaltmittel im Form von Schaltern, an einen Gleichspannungszwischenkreis angeschlossen, An den Gleichspannungszwischenkreis sind die Generatoren und die elektrischen Antriebe jeweils über weitere Schaltmittel in Form von Schaltern angeschlossen. Die Schaltmittel sind von einer Steuereinheit steuerbar. In sämtlichen Modes des Schiffes ist zumindest ein Modul der Energieversorgung, gebildet von einer Batterie oder einem Generator, deaktiviert und durch selektive Aktivierung der Generatoren diese in ihren optimalen Arbeitspunkten betrieben werden. Mittels der Steuereinheit wird eine Überwachung zur Ausfallsicherung des Antriebssystems durchgeführt. Bei Detektion eines Ausfalls eines elektrischen Antriebs auf einer Antriebswelle wird durch betätigen der Schalter der defekte elektrische Antrieb vom Gleichspannungszwischenkreis abgekoppelt. Ein intakter elektrischer Antrieb auf dieser Antriebswelle wird dadurch aktiviert, dass der zugeordnete Schalter geschlossen ist. Bei einem Ausfall eines Generators oder einer Batterie wird dieser oder diese durch Betätigen der Schalter vom Gleichspannungszwischenkreis abgekoppelt und ein bisher nicht aktivierter Generator an den Gleichspannungszwischenkreis angekoppelt.

Mit der erfindungsgemäß vorgesehenen Anordnung von Batterien als zusätzlicher Energieversorgung wird ein besonders ökonomischer und ausfallsicherer Betrieb des Antriebssystems gewährleistet, wobei als zusätzlicher Vorteil eine hohe Umweltverträglichkeit erhalten wird.

Das erfindungsgemäße Antriebssystem kann dabei für Schiffe unterschiedlicher Art eingesetzt werden, insbesondere für Schiffe, die in küstennahen Gewässern und Flüssen eingesetzt werden, wie zum Beispiel Hafen Bugsier Schleppern sowie Fähren. Der Einsatz des erfindungsgemäßen Antriebssystems ist dort besonders vorteilhaft, wo aufgrund gesetzlicher Bestimmungen neue Schiffe nicht mehr mit Dieselmotoren ausgestattet werden dürfen. Beispiele sind Neubauschiffe in norwegischen Fjorden.

Das erfindungsgemäße Antriebssystem wird besonders vorteilhaft für Binnenschiffe und Hafen Bugsier Schlepper eingesetzt. Mit der erfindungsgemäßen Steuerung der elektrischen Antriebe wird gegenüber bekannten Antriebssystemen für Binnenschiffe, die ausschließlich Dieselmotoren einsetzen, eine besonders hohe Steigerung des Wirkungsgrads und damit der Wirtschaftlichkeit des Antriebssystems erhalten.

Bei dem erfindungsgemäßen Antriebssystem wird ein besonders energieeffizienter Betrieb dadurch erreicht, dass in Phasen mit hohem oder mittlerem Leistungsbedarf der elektrischen Antriebe die Generatoren zur Energieversorgung genutzt werden. Dabei wird die modulare, redundante Ausbildung der Generatoren derart ausgenutzt, dass selektiv, insbesondere über eine Steuereinheit, eine geeignete Anzahl von Generatoren derart aktiviert wird, dass diese Generatoren in ihren optimalen Arbeitspunkten arbeitend ausreichend Energie für die elektrischen Antriebe zur Verfügung stellen und vorhandene überschüssige Energie zum Aufladen der Batterien verwendet wird. Mit den so während der Fahrt des Schiffs aufgeladenen Batterien kann dann in geeigneten Phasen, insbesondere in Phasen mit geringem Leistungsbedarf der elektrischen Antriebe deren Energieversorgung allein über die Batterie erfolgen, das heißt die Generatoren können dann abgeschaltet werden.

Mit der Energieversorgung der elektrischen Antriebe über die Batterien in den genannten Phasen des Arbeitsbetriebs des Antriebssystems wird ein umweltschonender Betrieb des Antriebssystems gewährleistet. Insbesondere kann somit ein Schiff im Bereich von Hafenfahrten im Batteriebetrieb angetrieben werden, so dass vom Schiff im Hafenbereich keine Schadstoffausstöße erfolgen. Zudem wird durch die Batterien als zusätzliche Energieversorgung eine optimale Energieausbeute erhalten, da bei einem Betrieb der elektrische Antrieb über die Generatoren von diesen erzeugten überschüssige Energie nicht verloren geht, sondern zur Aufladung der Batterien genutzt werden kann.

Erfindungsgemäß sind die Batterien über das oder die Schaltmittel an einen Gleichspannungszwischenkreis angeschlossen, wobei an den Gleichspannungszwischenkreis die Generatoren und die elektrischen Antriebe jeweils über weitere Schaltmittel angeschlossen sind. Dabei sind die Schaltmittel von einer Steuereinheit steuerbar.

Durch die Anschaltung der Komponenten des Antriebssystems an einen gemeinsamen Gleichspannungszwischenkreis ergibt sich ein besonders einfacher und kompakter Aufbau des Antriebssystems. Die Steuerung der Komponenten kann dabei über die Steuereinheit einfach derart vorgenommen werden, dass die Schaltmittel, über welche die Komponenten des Antriebssystems an den Gleichspannungszwischenkreis angeschaltet sind, betätigt werden.

Mit diesem Antriebssystem kann die für das Anfahren des Schiffes benötigte Energie für die elektrischen Antriebe nahezu verzögerungsfrei bereitgestellt werden, wobei hierzu bevorzugt mehrere Generatoren und/oder die Batterien des Antriebssystems aktiviert werden.

Besonders vorteilhaft hierbei ist, dass allein durch die Betätigung der Schaltmittel der Modus der Batterie umschaltbar ist. Je nach Vorgabe der Schaltzustände der Schaltmittel werden die Batterien durch die Generatoren, die dem Gleichspannungszwischenkreis Energie zuführen, über den Gleichspannungszwischenkreis aufgeladen oder die Batterien dienen als Energielieferanten für die elektrischen Antriebe, in dem sie Energie in den Gleichspannungszwischenkreis einspeisen.

Die Batterien sind besonders vorteilhaft von Lithium-Polymer-Batterien gebildet. diese weisen bei geringem Gewicht eine besonders hohe Leistungsdichte auf

Durch die redundante Ausbildung der elektrischen Antriebe und Generatoren wird eine hohe Ausfallsicherheit des erfindungsgemäßen Antriebssystems erzielt.

Die Redundanz der Energieversorgung wird durch die zusätzlich vorgesehen Batterien noch weiter erhöht. Dabei kann zur weiteren Erhöhung der Ausfallsicherheit die Anordnung der Batterien auch selbst redundant aufgebaut sein.

Zur Erzielung einer hohen Ausfallsicherheit erfolgt in der Steuereinheit eine Ausfall- und/oder Fehlerkontrolle von Komponenten des Antriebssystems, so dass in Abhängigkeit dieser Kontrolle die Generatoren und elektrischen Antriebe gesteuert, bevorzugt aktiviert oder deaktiviert werden. So kann bei Ausfall eines Generators das Antriebssystem mit der verbleibenden Anzahl aktivierter, noch intakter Generatoren mit reduzierter Leistung weiterbetrieben werden. Alternativ kann bei Ausfall eines Generators dieser deaktiviert werden und dafür ein intakter, bislang noch nicht aktiver Generator aktiviert werden. Weiterhin kann bei Ausfall eines oder aller Generatoren die Anordnung der Batterien als Notfallversorgung dienen. Umgekehrt kann bei Ausfall der Batterien als Energieversorgung wenigstens ein Generator deren Funktion übernehmen.

Für die Aktivierung und Deaktivierung von elektrischen Antrieben können entsprechende Maßnahmen zur Ausfallsicherung getroffen sein. Zur Gewährleistung einer fehlersicheren Kontrollfunktion kann schließlich die Steuereinheit selbst redundant, das heißt fehlersicher ausgelegt sein.

Die Erfindung wird im Folgenden anhand der Zeichnungen erläutert. Es zeigen:
- Figur 1:: Ausführungsbeispiel eines Antriebssystems für ein Schiff.
- Figur 2:: Blockschaltbild mit einer Steuereinheit zur Steuerung von Kom- ponenten des Antriebssystems gemäß Figur 1.

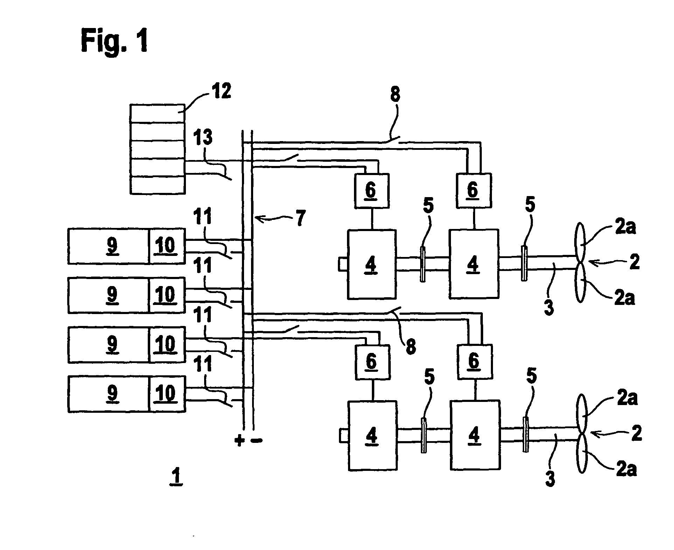

Figur 1 zeigt ein Ausführungsbeispiel des erfindungsgemäßen Antriebssystems 1 für ein Schiff. Bei dem Schiff handelt es sich um ein Binnenschiff, das als Frachtschiff ausgebildet ist. Das Antriebssystem 1 weist im vorliegenden Fall zwei Propeller 2 auf, wobei jeder Propeller 2 am Ende einer Antriebswelle 3 angeordnet ist. Die Propeller 2 sind im vorliegenden Fall identisch ausgebildet und weisen eine Anordnung von in regelmäßigen Winkeln zueinander angeordneten Propellerblättern 2a auf.

Zum Antrieb der Propeller 2 sind auf jeder Antriebswelle 3 zwei elektrische Antriebe 4 vorgesehen. Generell können auch mehrere elektrische Antriebe 4 auf einer Antriebswelle 3 vorgesehen sein. Die elektrischen Antriebe 4 einer Antriebswelle 3 bilden für den zugeordneten anzutreibenden Propeller 2 eine redundante Antriebseinheit. Die einzelnen elektrischen Antriebe 4 können identisch oder unterschiedlich ausgebildet sein. Vorzugsweise werden als elektrische Antriebe 4 Torquemotoren eingesetzt, die bereits bei geringen Drehzahlen hohe Drehmomente erzeugen. Zweckmäßig sind die elektrischen Antriebe 4 als Hohlwellenmotoren ausgebildet, die als Direktantriebe auf der Antriebswelle 3 angeordnet werden können. Wie aus Figur 1 ersichtlich, ist an jeder Antriebswelle 3 zwischen dem elektrischen Antrieb 4 und dem Propeller 2 eine Kupplung 5 vorgesehen. Jedem elektrischen Antrieb 4 ist ein Wechselrichter 6 vorgeordnet. Zwischen dem Propeller 2 und dem daran anschließenden elektrischen Antrieb 4 einer Antriebswelle 3 kann ein nicht dargestelltes Drucklager vorgesehen sein. Die elektrischen Antriebe 4 sind zweckmäßig in Fundamenten gelagert.

Die Spannungsversorgung erfolgt über einen Gleichspannungszwischenkreis 7. Eine im Gleichspannungszwischenkreis 7 zur Verfügung gestellte Gleichspannung wird in den Wechselrichtern 6 in eine Wechselspannung mit einer für die elektrischen Antriebe 4 geeigneten Frequenz umgesetzt.

Die einzelnen elektrischen Antriebe 4 können über Schaltmittel in Form von Schaltern 8, einzeln durch An- oder Abkoppeln vom Gleichspannungszwischenkreis 7 aktiviert oder deaktiviert werden.

Zur Generierung der Zwischenspannung im Gleichspannungszwischenkreis 7 sind vier Generatoren 9 vorgesehen. Generell kann auch eine andere Anzahl von mehreren Generatoren 9 vorgesehen sein, wobei diese generell identisch oder unterschiedlich ausgebildet sein können. Im vorliegenden Fall ist ein Generator 9 mit einer kleinen Leistung vorgesehen. Die drei anderen Generatoren 9 weisen dieselbe Leistung auf, wobei diese größer ist als die Leistung des ersten Generators 9. Alternativ können auch identische Generatoren 9 mit gleicher Leistung vorgesehen sein. Die einzelnen Generatoren 9 bilden Komponenten einer redundanten Energieversorgungseinheit. Die Generatoren 9 bestehen jeweils aus einem Dieselmotor und einem elektrischen Generator 9. Jedem Generator 9 ist ein Wechselrichter 10 nachgeordnet. Mit dem Wechselrichter 10 werden in dem Generator 9 generierte Wechselspannungen in eine Gleichspannung transformiert und in den Gleichspannungszwischenkreis 7 eingespeist. Die Generatoren 9 sind jeweils über Schaltmittel in Form eines Schalters 11 dem Gleichspannungszwischenkreis 7 selektiv zuschaltbar.

Die redundante Energieversorgungseinheit wird komplettiert durch eine Anordnung von Batterien 12. Die Batterien 12 sind im vorliegenden Fall von Lithium-Polymer-Batterien gebildet. Die gesamte Anordnung der Batterien 12 ist über ein Schaltmittel in Form eines weiteren Schalters 13 an den Gleichspannungszwischenkreis 7 anschaltbar oder von diesem abschaltbar.

Die Redundanz der Energieversorgungseinheit kann weiterhin dadurch erhöht werden, dass die Anordnung der Batterien 12 wenigstens zwei Gruppen bildet, wobei jede Gruppe einzeln über einen Schalter 13 an den Gleichspannungszwischenkreis 7 anschaltbar ist.

Der oder die Schalter 13 zur Anschaltung der Batterien 12 an den Gleichspannungszwischenkreis 7 sind als Leistungsschalter ausgebildet. Dasselbe gilt bevorzugt für die Schalter 8, 11 zur Anschaltung der elektrischen Antriebe 4 beziehungsweise der Generatoren 9.

Bei dem Antriebssystem 1 bilden die Antriebswelle 3 oder die Antriebswellen 3 mit den darauf angeordneten elektrischen Antrieben 4 und Propeller 2 eine oder mehrere erste modulare Einheiten, die von den Generatoren 9 als zweite modulare Einheiten unabhängig installiert werden können.

Damit können die Antriebswellen 3 mit den elektrischen Antrieben 4 im Heckbereich des Schiffes angeordnet werden, während die Generatoren 9 im Bugbereich angeordnet werden können. Da somit die Generatoren 9 als großvolumige Energieversorgungseinheiten aus dem Heckbereich herausverlagert sind, steht dieser frei gewordene Heckbereich als Ladefläche für zu ladende Fracht zur Verfügung. Bei sämtlichen Binnenschiffen ist der Heckbereich erheblich breiter als der nach vorne schmal zulaufende Bugbereich. Durch die erfindungsgemäße Verlagerung der Generatoren 9 als Energieversorgungseinheiten in den Bugbereich und die sich daraus ergebende Nutzbarkeit des Heckbereichs als Ladefläche wird die Ladekapazität des Binnenschiffes signifikant erhöht. Da das Binnenschiff typischerweise im Heckbereich die größte Breite aufweist, stellt dieser Bereich eine besonders wertvolle Ladefläche dar, da dort auch große Frachtstücke wie Container in großer Zahl untergebracht werden können.

Das modulare Konzept des erfindungsgemäßen Antriebssystems 1 kann dadurch besonders vorteilhaft ausgeprägt sein, dass eine oder alle Antriebswellen 3 mit den daran angeordneten Propellern 2 und elektrischen Antrieben 4 eine vormontierte, mechanische Baueinheit bilden. Dabei sind zweckmäßig die elektrischen Antriebe 4 auf Fundamenten gelagert.

Die so gebildeten modularen Einheiten können rationell gefertigt werden und können zudem besonders einfach und schnell an geeigneten Einbauorten im Schiff installiert werden.

Dasselbe gilt für die Batterien 12 und insbesondere auch für die Generatoren 9, die ebenfalls auf Fundamenten gelagerte, vormontierte Einheiten bilden können.

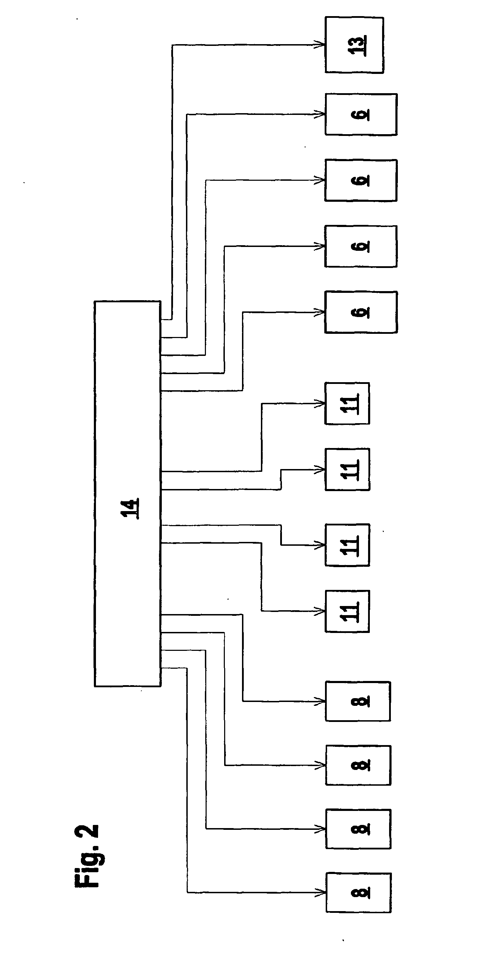

Figur 2 zeigt ein Blockschaltbild mit einer Steuereinheit 14 und Komponenten des Antriebssystems 1 gemäß Figur 1. Die Steuereinheit 14 kann als zentrale Steuerung, bestehend aus einer SPS-Steuerung oder einer Anordnung von SPS-Steuerungen, ausgebildet sein. Alternativ können auch einzelne Funktionen der Steuereinheit 14 von dezentralen Steuerungen, die beispielsweise in den Wechselrichtern 6 der elektrischen Antriebe 4 integriert sind, übernommen werden.

Wie aus Figur 2 ersichtlich, werden mit der Steuereinheit 14 die Schalter 8, 11, 13 sowie die Wechselrichter 6 der elektrischen Antriebe 4 gesteuert. Zur Durchführung der Steuerung werden vorzugsweise fortlaufend Kenngrößen des Antriebssystems 1, insbesondere der elektrischen Antriebe 4, ermittelt und in die Steuereinheit 14 eingelesen. Zur Ermittlung derartiger Kenngrößen können geeignete Sensoren vorgesehen sein. Beispielsweise können Sensoren zur Bestimmung der Schiffsgeschwindigkeit vorgesehen sein. Weiterhin können durch Sensoren Kenngrößen der elektrischen Antriebe 4, insbesondere deren aktuelle Drehzahlen und Drehmomente, bestimmt werden. Besonders vorteilhaft sind an dem Wechselrichter 10 Mittel zur Erfassung von Kenngrößen der elektrischen Antriebe 4 wie deren Drehzahlen und Motorströme integriert, wobei die Motorströme ein Maß für die Drehmomente der elektrischen Antriebe 4 bilden.

Mit der Steuereinheit 14 wird insbesondere die Energieversorgung für die elektrischen Antriebe 4 gesteuert. Die Steuerung erfolgt dabei angepasst an den aktuellen Leistungsbedarf der elektrischen Antriebe 4. Hierzu erfolgt in der Steuereinheit 14 insbesondere eine Umschaltung von Generatorbetrieb auf Batteriebetrieb und umgekehrt, wobei hierzu über die Steuereinheit 14 die Schalter 11, 13 in geeigneter Weise betätigt werden.

Bei mittlerem und hohem Leistungsbedarf erfolgt die Energieversorgung allein über die Generatoren 9. Hierzu sind alle oder ein Teil der Generatoren 9 an den Gleichspannungszwischenkreis 7 angeschaltet, so dass mit diesen Generatoren 9 im Gleichspannungszwischenkreis 7 die für die elektrischen Antriebe 4 benötigte Versorgungsspannung zur Verfügung gestellt wird. Vorzugsweise stellen dabei die Generatoren 9 überschüssige Energien zur Verfügung, die zum Laden der Batterien 12 verwendet wird. Der Schalter 13 oder allgemein die Schaltmittel zur Ankopplung der Batterien 12 an den Gleichspannungszwischenkreis 7 sind dabei so ausgebildet, dass diese über die Steuereinheit 14 in einen Schaltzustand versetzt werden, in welchem die Batterien 12 mit der im Gleichspannungszwischenkreis 7 erzeugten Gleichspannung aufgeladen werden.

Generell werden durch die selektive Aktivierbarkeit der einzelnen Generatoren 9 im Generatorbetrieb die einzelnen aktivierten Generatoren 9 in ihren optimalen Arbeitspunkten betrieben. Dadurch ist der Betrieb der Generatoren 9 hinsichtlich deren Energieverbrauch und Leistungsabgabe optimiert.

Bei geringem Leistungsbedarf der elektrischen Antriebe 4 erfolgt die Energieversorgung im Batteriebetrieb, das heißt die Generatoren 9 sind vom Gleichspannungszwischenkreis 7 abgekoppelt, während die Batterien 12 über den Schalter 13 oder allgemein die Schaltmittel so an den Gleichspannungszwischenkreis 7 angeschaltet sind, dass die Batterien 12 Energie in den Gleichspannungszwischenkreis 7 einspeisen.

Die über die Steuereinheit 14 durchgeführte Umschaltung zwischen Generatorbetrieb und Batteriebetrieb erfolgt unterbrechungslos derart, dass für eine kurze Übergangszeit von wenigen Sekunden oder Bruchteilen hiervon die Generatoren 9 und die Batterien 12 so geschaltet sind, dass beide Einheiten Energie in den Gleichspannungszwischenkreis 7 einspeisen, so dass gewährleistet ist, dass die elektrischen Antriebe 4 ohne Unterbrechung fortlaufend mit Energie versorgt werden.

Das Binnenschiff wird im vorliegenden Fall in vier unterschiedlichen Modes betrieben. Der erste Mode bildet die sogenannte Bergfahrt des Schiffs bei voller Belastung. In diesem Fall.beträgt der Leistungsbedarf etwa 80 % der von den Generatoren 9 bereitstellbaren Leistung. In diesem Mode werden mittels der Steuereinheit 14 die drei Generatoren 9 mit hoher Leistung aktiviert, während der Generator 9 mit kleiner Leistung deaktiviert ist. In diesem Mode werden die Batterien 12 über die aktivierten Generatoren 9 aufgeladen.

Bei dem zweiten und dritten Mode (Talfahrt mit oder ohne Belastung) beträgt der Leistungsbedarf etwa 50 % beziehungsweise 35 % der maximal verfügbaren Leistung. Um diese Leistungen zur Verfügung zu stellen, werden zweckmäßig zwei der Generatoren 9 mit der größeren Leistung aktiviert, während die restlichen Generatoren 9 deaktiviert sind. Auch in diesen Modes werden die Batterien 12 über die aktivierten Generatoren 9 aufgeladen.

Schließlich wird bei dem vierten Mode (Kanalfahrt), bei dem nur etwa 10 % der maximalen Leistung benötigt wird, das Antriebssystem 1 im Batteriebetrieb betrieben, das heißt die Energieversorgung erfolgt ausschließlich über die Batterien 12, während die Generatoren 9 abgeschaltet sind.

Bei sämtlichen Modes des Schiffes ist zumindest ein Modul der Energieversorgung, das heißt die Batterie 12 oder ein Generator 9, deaktiviert. Vorteilhaft ist auch immer ein elektrischer Antrieb 4 pro Antriebswelle 3 deaktiviert.

Diese im regulären Betrieb des Schiffes nicht genutzten Einheiten werden für eine mittels der Steuereinheit 14 durchgeführten Überwachung zur Ausfallsicherung des Antriebssystems 1 genutzt. Bei dieser Überwachung überprüft die Steuereinheit 14 fortlaufend die Funktion der angeschlossenen Einheiten, insbesondere aller elektrischen Antriebskomponenten. Wird ein Fehler oder ein Ausfall wenigstens einer dieser Komponenten registriert, wird ein Alarmsignal generiert. Vorteilhaft wird bei Auftreten des Alarmsignals das Antriebssystem 1 durch die Steuereinheit 14 selbsttätig in einen sicheren Zustand überführt.

Ist beispielsweise auf einer Antriebswelle 3 ein elektrischer Antrieb 4 ausgefallen, wird dies von der Steuereinheit 14 detektiert, worauf durch Betätigen der Schalter 8 der defekte elektrische Antrieb 4 vom Gleichspannungszwischenkreis 7 abgekoppelt und ein intakter elektrischer Antrieb 4 auf dieser Antriebswelle 3 dadurch aktiviert wird, dass der zugeordnete Schalter 8 geschlossen ist. Das Antriebssystem 1 ist damit wieder voll funktionsfähig.

Ist einer der im Betrieb befindlichen Generatoren 9 ausgefallen, so wird auch dies von der Steuereinheit 14 detektiert und durch Betätigen der Schalter 11 wird der defekte Generator 9 vom Gleichspannungszwischenkreis 7 abgekoppelt und ein intakter, bisher nicht aktivierter Generator 9 an den Gleichspannungszwischenkreis 7 angekoppelt.

Ebenso kann bei Ausfall der zur Energieversorgung aktivierten Batterien 12 ein Generator 9 aktiviert werden um die Funktion der ausgefallenen Batterien 12 zu übernehmen.

### Bezugszeichenliste

- (1): Antriebssystem
- (2): Propeller
- (2a): Propellerblatt
- (3): Antriebswelle
- (4): elektrischer Antrieb
- (5): Kupplung
- (6): Wechselrichter
- (7): Gleichspannungszwischenkreis
- (8): Schalter
- (9): Generator
- (10): Wechselrichter
- (11): Schalter
- (12): Batterie
- (13): Schalter
- (14): Steuereinheit

## Patentansprüche

1. Antriebssystem (1) für ein Schiff, mit wenigstens einer Antriebswelle (3) mit einem Propeller (2) und einer Mehrfachanordnung von elektrischen Antrieben (4) auf der wenigstens einen Antriebswelle (3) als ersten modularen, redundanten Einheiten, mit Generatoren (9) für die Energieversorgung der elektrischen Antriebe (4) als zweiten modularen, redundanten Einheiten, wobei eine Anordnung von Batterien (12) vorgesehen ist, wobei die Batterien (12) über Schaltmittel wahlweise so schaltbar sind, dass mit diesen eine Energieversorgung der elektrischen Antriebe (4) durchführbar ist, oder dass diese mittels der Generatoren (9) aufladbar sind, wobei die Batterien (12) über das oder die Schaltmittel im Form von Schaltern (13) an einen Gleichspannungszwischenkreis (7) angeschlossen sind, wobei an den Gleichspannungszwischenkreis (7) die Generatoren (9) und die elektrischen Antriebe (4) jeweils über weitere Schaltmittel in Form von Schaltern (8, 11) angeschlossen sind, wobei die Schaltmittel von einer Steuereinheit (14) steuerbar sind, wobei in sämtlichen Modes des Schiffes zumindest ein Modul der Energieversorgung gebildet von einer Batterie (12) oder einem Generator (9) deaktiviert ist und durch selektive Aktivierung der Generatoren (9) diese in ihren optimalen Arbeitspunkten betrieben werden, wobei mittels der Steuereinheit (14) eine Überwachung zur Ausfallsicherung des Antriebssystems (1) durchgeführt wird, wobei bei Detektion eines Ausfalls eines elektrischen Antriebs (4) auf einer Antriebswelle (3) durch Betätigen der Schalter (8) der defekte elektrische Antrieb (4) vom Gleichspannungszwischenkreis (7) abgekoppelt und ein intakter elektrischer Antrieb (4) auf dieser Antriebswelle (3) **dadurch** aktiviert wird, dass der zugeordnete Schalter (8) geschlossen ist, und wobei bei einem Ausfall eines Generators (9) oder einer Batterie (12) dieser oder diese durch Betätigen der Schalter (11, 13) vom Gleichspannungszwischenkreis (7) abgekoppelt wird und ein bisher nicht aktivierter Generator (9) an den Gleichspannungszwischenkreis angekoppelt wird.

2. Antriebssystem (1) nach Anspruch 1, **dadurch gekennzeichnet, dass** die Schaltmittel von Leistungsschaltern gebildet sind.

3. Antriebssystem (1) nach einem der Ansprüche 1 oder 2, **dadurch gekennzeichnet**, das die Batterien (12) von Lithium-Polymer-Batterien gebildet sind.

4. Antriebssystem (1) nach einem der Ansprüche 1 bis 3, **dadurch gekennzeichnet, dass** mittels der Steuereinheit (14) eine unterbrechungslose Umschaltung von einer Energieversorgung der elektrischen Antriebe (4) über Generatoren (9) zu einer Energieversorgung der elektrischen Antriebe (4) über Batterien (12) und umgekehrt durchführbar ist.

5. Antriebssystem (1) nach einem der Ansprüche 1 bis 4, **dadurch gekennzeichnet, dass** die Batterien (12) modulare Einheiten bilden.

6. Antriebssystem (1) nach einem der Ansprüche 1 bis 5, **dadurch gekennzeichnet, dass** die Batterien (12) redundante Einheiten bilden.

## Claims

1. Drive system (1) for a ship, with at least one drive shaft (3) with a propeller (2) and a multiple arrangement of electric drives (4) on the at least one drive shaft (3) as first, modular, redundant units, with generators (9) for energy supply of the electric drives (4) as second, modular, redundant units, wherein an arrangement of batteries (12) is provided, wherein the batteries (12) are so selectably switchable by way of switching means that an energy supply of the electric drives (4) can be carried out by these or that these are chargeable by means of the generators (9), wherein the batteries (12) are connected with a direct voltage intermediate circuit (7) by way of the switching means in the form of switches (13), wherein the generators (9) and the electric drives (4) are respectively connected with the direct voltage intermediate circuit (7) by way of further switching means in the form of switches (8, 11), wherein the switching means are controllable by a control unit (14), wherein in all modes of the ship at least one module of the energy supply formed by a battery (12) or a generator (9) is deactivated and through selective activation of the generators (9) these are operated at their optimum working points, wherein monitoring for fail-safety of the drive system (1) is carried out by means of the control unit (14), wherein on detection of a failure of an electric drive (4) on a drive shaft (3) the defective electric drive (4) is decoupled from the direct voltage intermediate circuit (7) by actuation of the switches (8) and an intact electric drive (4) on this drive shaft (3) is activated in that the associated switch (8) is closed, and wherein in the case of failure of a generator (9) or a battery (12) this is decoupled from the direct voltage intermediate circuit (7) by actuation of the switches (11, 13) and a previously non-activated generator (9) is coupled to the direct voltage intermediate circuit.

2. Drive system (1) according to claim 1, **characterised in that** the switching means are formed by power switches.

3. Drive system 91) according to one of claims 1 and 2, **characterised in that** the batteries (12) are formed by lithium-polymer batteries.

4. Drive system (1) according to any one of claims 1 to 3, **characterised in that** an uninterrupted switching over from an energy supply of the electric drives (4) via the generators (9) to an energy supply of the electric drives (4) via batteries (12) and conversely is performable by means of the control unit (14).

5. Drive system (1) according to any one of claims 1 to 4, **characterised in that** the batteries (12) form modular units.

6. Drive system (1) according to any one of claims 1 to 5, **characterised in that** the batteries (12) form redundant units.

## Revendications

1. Système d'entraînement (1) pour un bateau, avec un arbre d'entraînement (3) muni d'une hélice propulsive (2) et avec un agencement multiple d'entraînements électriques (4) sur l'arbre d'entraînement au moins unique (3) en tant que premières unités redondantes modulaires, avec des générateurs (9) pour l'alimentation en énergie des entraînements électriques (4) en tant que deuxièmes unités redondantes modulaires, sachant qu'il est prévu un agencement de batteries (12), sachant que les batteries (12) peuvent, via des moyens de commutation, être commutées au choix de telle sorte qu'elles permettent d'effectuer une alimentation en énergie des entraînements électriques (4) ou qu'elles peuvent être rechargées au moyen des générateurs (9), sachant que les batteries (12) sont raccordées à un circuit intermédiaire de tension continue (7) par l'intermédiaire du ou des moyens de commutation sous la forme de commutateurs (13), sachant que les générateurs (9) et les entraînements électriques (4) sont respectivement raccordés au circuit intermédiaire de tension continue (7) par l'intermédiaire d'autres moyens de commutation sous la forme de commutateurs (8, 11), sachant que les moyens de commutation peuvent être commandés par une unité de commande (14), sachant que, dans tous les modes du bateau, au moins un module d'alimentation en énergie formé par une batterie (12) ou un générateur (9) est désactivé et, par l'activation sélective des générateurs (9), ceux-ci sont exploités à leurs points de travail optimaux, sachant qu'au moyen de l'unité de commande (14), on effectue une surveillance de la sécurité de fonctionnement du système d'entraînement (1), sachant qu'en cas de détection d'une défaillance d'un entraînement électrique (4) sur un arbre d'entraînement (3), l'entraînement électrique (4) défectueux est désaccouplé du circuit intermédiaire de tension continue (7) par l'actionnement des commutateurs (8) et un entraînement électrique (4) intact sur cet arbre d'entraînement (3) est activé par le fait que le commutateur (8) associé est fermé, et sachant qu'en cas de défaillance d'un générateur (9) ou d'une batterie (12), celui-ci ou celle-ci est désaccouplé(e) du circuit intermédiaire de tension continue (7) par l'actionnement des commutateurs (11, 13) et un générateur (9) jusqu'alors non activé est accouplé au circuit intermédiaire de tension continue.

2. Système d'entraînement (1) selon la revendication 1, **caractérisé en ce que** les moyens de commutation sont formés par des disjoncteurs de puissance.

3. Système d'entraînement (1) selon la revendication 1 ou 2, **caractérisé en ce que** les batteries (12) sont formées par des batteries lithium-polymère.

4. Système d'entraînement (1) selon l'une des revendications 1 à 3, **caractérisé en ce qu'**au moyen de l'unité de commande (14), on peut effectuer un passage sans interruption d'une alimentation en énergie des entraînements électriques (4) au moyen de générateurs (9) à une alimentation en énergie des entraînements électriques (4) au moyen de batteries (12), et inversement.

5. Système d'entraînement (1) selon l'une des revendications 1 à 4, **caractérisé en ce que** les batteries (12) forment des unités modulaires.

6. Système d'entraînement (1) selon l'une des revendications 1 à 5, **caractérisé en ce que** les batteries (12) forment des unités redondantes.
